# EUROPÄISCHE PATENTSCHRIFT

(11) **EP 1 785 255 B1**
(45) Veröffentlichungstag und Bekanntmachung des Hinweises auf die Patenterteilung: **04.04.2012**
(21) Anmeldenummer: 06023018.2
(22) Anmeldetag: 06.11.2006
(51) Int. Cl.: B29C 45/16

(54) **Verfahren und Kunststoffspritzvorrichtung zur Herstellung eines Lichtleitkörpers und Lichtleitkörper**
Process and injection moulding apparatus for manufacturing a light guide and light guide
Procédé et dispositif de moulage par injection d'un guide de lumière et guide de lumière

(30) Priorität: 11.11.2005 DE 102005053979
(43) Veröffentlichungstag der Anmeldung: 16.05.2007
(73) Patentinhaber: Wilhelm Weber GmbH & Co. KG, 73730 Esslingen (DE)
(72) Erfinder: Schimek, Johann, 73207 Plochingen (DE)
(74) Vertreter: Bregenzer, Michael

(56) Entgegenhaltungen:
- EP-A2- 0 839 636
- WO-A-2005/077636
- JP-A- 62 122 725
- JP-A- 62 273 813

## Beschreibung

Die Erfindung betrifft ein Verfahren zur Herstellung eines Lichtleitkörpers aus lichtdurchlässigem Kunststoffmaterial, bei dem das Kunststoffmaterial und eine Kunststoffspritzvorrichtung hierfür.

Aus der EP 0 839 636 A2 gehen ein derartiges Herstellungsverfahren sowie eine Kunststoffspritzvorrichtung dieser Art hervor. Ein vorgefertigter Spritzling wird in eine Form eingesetzt, wo weiteres Kunststoffmaterial angespritzt wird. Der eingesetzte Spritzling und das angespritzte Material verbinden sich im Wesentlichen homogen, so dass beispielsweise bei Sonnenlicht keine Grenzschicht zwischen den beiden Komponenten erkennbar ist.

Aus der JP 62-273813 geht ein Kunststoff-Spritzverfahren hervor, bei der zur Vermeidung von Schwindung ein Kunststoffkern mit weiteren Lagen aus Kunststoffmaterial versehen wird.

Lichtleitkörper, z.B. Linsen, Lichtleitkanäle oder dergleichen, werden beispielsweise für Sensoren, insbesondere Regensensoren, zum Führen von Licht an zu beleuchtende Stellen oder dergleichen benötigt. Die geometrischen Eigenschaften und Dimensionen des jeweiligen Lichtleitkörpers hängen von den Einbauverhältnissen, von geforderten optischen Eigenschaften und dergleichen ab. Wenn ein Lichtleitkörper verhältnismäßig große Materialdikken aufweist, ist dessen Herstellung aufwändig. Das lichtdurchlässige Kunststoffmaterial wird dann in eine entsprechend große Formkavität eingespritzt und muss bei größerem Volumen länger auskühlen. Ferner neigt das Kunststoffmaterial zum Schwinden, so dass beispielsweise Vakuolen, Dellen an der Oberfläche des Lichtleitkörpers oder dergleichen entstehen können. Deshalb muss verhältnismäßig lange durch die Anspritzkanäle Kunststoffmaterial nachgedrückt werden. Auch dies ist zeitaufwändig und hat zudem die Folge, dass am Spritzling voluminöse Angussreste bleiben, die in einem separaten Arbeitsgang entfernt und als Abfälle entsorgt werden müssen.

Es ist daher die Aufgabe der vorliegenden Erfindung, ein Verfahren sowie eine Kunststoffspritzvorrichtung bereitzustellen, die eine effiziente Herstellung auch voluminöser Lichtleitkörper ermöglichen.

Zur Lösung der Aufgabe wird ein Verfahren gemäß der technischen Lehre des Anspruchs 1 vorgeschlagen.

Die Kunststoffspritzvorrichtung enthält entsprechende Mittel zur Durchführung des Verfahrens, insbesondere Positioniermittel zum Anordnen des Spritzlings in einer oder mehreren größeren Kavitäten, um dort jeweils weitere Kunststoff-Lagen anzuspritzen, die sich homogen mit dem Material des Spritzlinges verbinden.

Mindestens eine zweite Lage wird an einen zur Verbindung mit weiterem lichtdurchlässigem Kunststoffmaterial bindungsfähigen Oberflächenbereich des Spritzlings angespritzt, der insoweit eine erste Lage bildet.

Der erfindungsgemäße Lichtleitkörper hat einen Mehrschichtaufbau, wobei sich die einzelnen Schichten homogen verbinden.

Weil die einzelnen Lagen oder Schichten verhältnismäßig dünn sind, sind nur sehr kurze Auskühlzeiten erforderlich. Erfindungsgemäß wird allerdings darauf geachtet, dass die Oberfläche, an die weiteres Kunststoffmaterial homogen angespritzt werden soll, nicht zu sehr auskühlt, beispielsweise nur in einem Bereich von etwa 80 bis 150 Grad Celsius, zweckmäßigerweise etwa 90 bis 120 Grad Celsius oder etwa 100 bis 120 Grad Celsius, etwa bei Polycarbonat. Man kann diesen Temperaturbereich auch beispielsweise als Werkzeugtemperaturbereich bezeichnen.

In diesem, vom jeweiligen Kunststoffmaterial abhängigen Temperaturbereich, ist das Kunststoffmaterial, beispielsweise Polycarbonat (PC), Polymethylmethacrylat (PMMA), Polyamid (PA), Cycloolefin-Copolymer (COC) oder dergleichen, noch bindungsfähig, so dass im Übergangsbereich zwischen den jeweiligen Lagen das später den Lichtleitkörper durchdringende Licht nicht oder zumindest im Wesentlichen nicht gebrochen wird.

Die Schichten oder Lagen verbinden sich lichtbrechungsfrei, so dass Lichtstrahlen von einer Lage zur nächsten ungehindert und ohne Winkeländerung übergehen. Die Lichtstrahlen verlaufen beim fertigen Lichtleitkörpers beispielsweise quer, z.B. senkrecht, zu Übergangsbereichen oder Übergangsflächen zwischen den Schichten oder Lagen, wobei die Übergangsbereiche zwar während der Produktion möglicherweise kurzzeitig vorhanden sind, beim fertigen Lichtleitkörper zumindest in dessen zum Licht Leiten vorgesehenen Innenvolumen aber praktisch nicht mehr ermittelbar sind.

Der Lichtleitkörper kann vorteilhaft mindestens einen lichtlenkenden Bereich oder mindestens einen optisches Funktionselement umfassen, z.B. mindestens eine Linse, eine Prismenfläche, ein Prisma, einen Lichtleiterabschnitt oder einen Lichtleitkanal, z.B. eine Leitertubus, oder dergleichen. Der Lichtleitkörper kann beides, Prismenflächen und Linsenflächen, aufweisen.

Der Lichtleitkörper ist auch in den Bereichen, an denen Lagen erfindungsgemäß aneinander gespritzt sind, derart homogen und ganz oder im Wesentlichen lichtbrechungsfrei, dass ein Verlauf der Lichtstrahlen durch die Schichtung nicht gestört wird. So können auch an lichtlenkenden Bereichen oder im Bereich optischer Funktionselemente, z.B. im Bereich einer Linse oder einer Prismenfläche, erfindungsgemäß hergestellte Lage aneinander grenzen. Die Prismenfläche ist dennoch zumindest zum Innern des Lichtleitkörpers hin durchgängig und plan.

Die Lagen verbinden sich derart homogen, dass im Innenvolumen keine physikalische oder chemische Trennebene oder Trennfläche innerhalb des fertigen Lichtleitkörpers vorhanden ist, wenn die Lagen aus Kunststoff gleicher Dichte bestehen. Bei Lagen aus gleichfarbigem Kunststoff ist beim fertigen Lichtleitkörper keine Trennebene oder Trennfläche sichtbar. Der fertige Lichtleitkörper bildet z.B. ein einziges Prisma oder eine einzige Linse, bei der keine optisch wirksame Schichtung erkennbar ist, auch wenn die Linse oder das Prisma Lichtleitkörper sozusagen lagenweise hergestellt ist.

Der Lichtleitkörper ist im Übergangsbereich zwischen den jeweiligen Lagen ganz oder zumindest im Wesentlichen lichtbrechungsfrei.

Das Kunststoffmaterial ist zweckmäßigerweise amorph und nicht kristallin.

Es ist festzuhalten, dass erfindungsgemäß an einem später im Innenvolumen des Lichtleitkörpers befindlichen Bereich und nicht an späteren Lichtaustrittsflächen oder Lichteintrittsflächen Kunststoffmaterial angespritzt wird.

Die Schwindungsproblematik ist bei dem erfindungsgemäßen Verfahren wesentlicher geringer, da die jeweils pro Lage angespritzten Volumina klein sind und daher weniger zum Schwinden neigen. Deshalb muss auch vergleichsweise wenig Kunststoffmaterial während des Abkühlens des Spritzlings nachgedrückt werden, um die Schwindungsproblematik auszugleichen. Daher kann eine plastische Seele im Anguss- bzw. Spritzkanal verbleiben. Der Spritzling kann ohne oder zumindest mit nur kleinen Angüssen aus der Gießwerkzeuganordnung entnommen werden, so dass die Nachbearbeitung des Spritzlinges entfällt oder zumindest weniger umfangreich ist und weniger Abfälle dabei entstehen.

Ferner sind an Außenflächen des Lichtleitkörpers keine oder nur sehr geringe Schwindungseffekte, z.B. Einbuchtungen oder unerwünschte Krümmungen, vorhanden, so dass eine solche Außenfläche beispielsweise eine optisch einwandfreie Linsenfläche oder Prismenfläche bilden kann. Eine Prismenfläche ist z.B. eben. Eine Krümmung einer Linsenfläche ist vorteilhaft durchgängig und optisch maßhaltig. Dies ist auch bei Lichtleitkörpern mit einem großen Kunststoffvolumen der Fall.

Das erfindungsgemäße Verfahren eignet sich beispielsweise zur Herstellung von Linsen, Lichtkanälen, Lichtleitkörpern mit Linsen und Kanälen oder dergleichen. Sofern ein kunststoffgleichen Kunststofftyps verwendet werden wird, beispielsweise COC mit COC (COC = Cycloolefin-Copolymer), Polycarbonat mit Polycarbonat (PC) oder dergleichen, ist es vorteilhaft möglich, lagenweise unterschiedlich eingefärbtes Kunststoffmaterial zu verwenden. Im Übergangsbereich zwischen den Kunststofflagen kommt es dennoch zu einer homogenen Bindung, so dass Licht später die Kunststofflagen zumindest im wesentlichen brechungsfrei passieren kann.

Vorteilhafte Ausgestaltungen der Erfindung ergeben sich aus den abhängigen Ansprüchen sowie aus der Beschreibung.

Vorteilhafterweise wird der Spritzling in der zweiten, gegebenenfalls in weiteren Formkavitäten dadurch angeordnet, dass eines der Formteile, beispielsweise das zweite Formteil, durch ein drittes Formteil ersetzt wird. Dazu wird das erste Formteil beispielsweise zu dem dritten Formteil verschoben oder verdreht.

Ferner ist es möglich, beispielsweise durch eine Kernrückzugstechnik die jeweilige Formkavität zu vergrößern, beispielsweise indem ein Abschnitt eines oder beider Formteile von der kleineren Kavität weg bewegt wird und diese somit vergrößert. Das jeweilige Formteil kann einstückig sein oder mehrere Formkomponenten umfassen, die auch zueinander beweglich sein können.

Der Spritzling des Lichtleitkörpers ist vor dem Anspritzen der mindestens einen zweiten Kunststoff-Lage zumindest außerhalb des bindungsfähigen Oberflächenbereiches, an den Kunststoff homogen angespritzt werden soll, im Wesentlichen formstabil.

An den erfindungsgemäß hergestellten Lichtleitkörper können auch weitere Kunststoffschichten konventionell angespritzt werden, beispielsweise ein Gehäuse für den Lichtleitkörper oder eine weiter ebenfalls lichtdurchlässige Kunststoffschicht, wobei zwischen dieser Kunststoffschicht und dem Spritzling, an den sie angespritzt ist, durchaus eine Lichtbrechung erwünscht sein kann, beispielsweise aus optischen Gründen.

Vorteilhafterweise hat die erfindungsgemäße Kunststoffspritzvorrichtung Temperiermittel zur Temperierung des Spritzlings, beispielsweise Heizkanäle, Heizschleifen, Kühlkanäle oder dergleichen in der Gießwerkzeuganordnung bzw. den Formteilen. Auf diesem Wege kann die Gießwerkzeuganordnung beispielsweise die Grenztemperatur an dem oder den bindungsfähigen Oberflächenbereich(en) einstellen. Ferner ist es möglich, dass die Temperiermittel den Spritzling unter die Grenztemperatur in Bereichen außerhalb des mindestens einen bindungsfähigen Oberflächenbereiches abkühlen, so dass der Spritzling dort zumindest im wesentlichen formstabil ist.

Die Einspritzanordnung der erfindungsgemäßen Kunststoffspritzvorrichtung ist zweckmäßigerweise zum Spritzen der jeweiligen Formkavität mit unterschiedlich farbigem Kunststoffmaterialien ausgestaltet, so dass bei dem Lichtleitkörper mindestens zwei homogen und zumindest im Wesentlichen lichtbrechungsfrei verbundene Kunststofflagen gebildet sind. Die Einspritzanordnung hat z.B. separate Einspritzeinrichtungen für jede Kunststofffarbe.

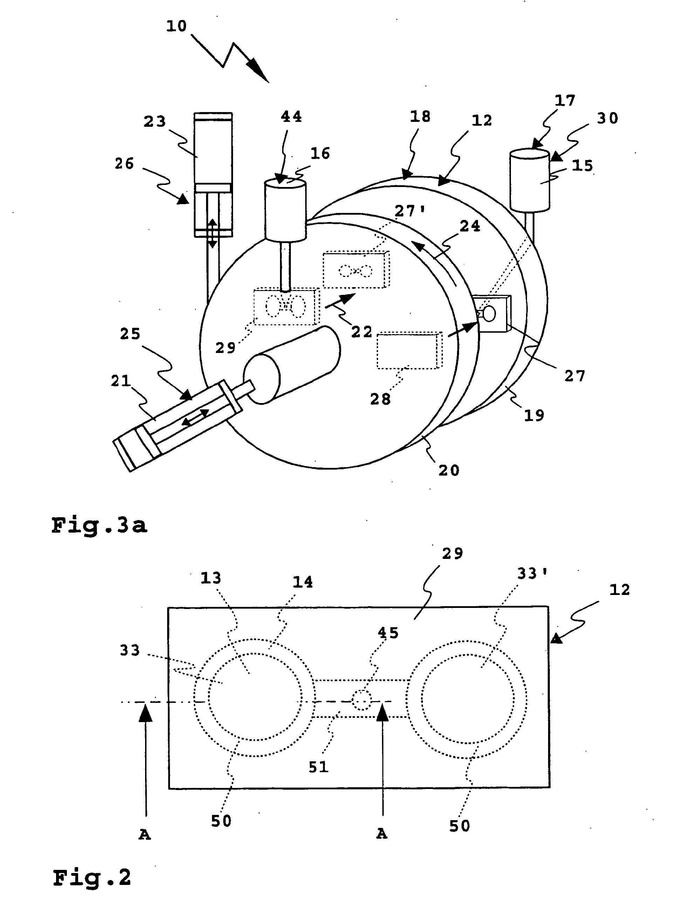

Nachfolgend werden Ausführungsbeispiele der Erfindung anhand der Zeichnung erläutert. Es zeigen:
- Figuren: Arbeitsschritte beim Spritzen eines ersten
- 1a - 1d: Lichtleitkörpers anhand einer erfindungsgemäßen Gießwerkzeuganordnung im Querschnitt entlang einer Linie A-A in Figur 2,
- Figur 2: eine Draufsicht auf ein drittes, in der Zeichnung unteres Formteil der Gießwerkzeuganordnung gemäß Figur 1,
- Figur 3a: eine Kunststoffspritzvorrichtung zur Durchführung des erfindungsgemäßen Verfahrens mit der Gießwerk- zeuganordnung gemäß Figuren 1 und 2, wobei die Formteile der Gießwerkzeuganordnung voneinander entfernt sind,
- Figur 3b: die Kunststoffspritzvorrichtung gemäß Figur 3a mit geschlossener Gießwerkzeuganordnung, wobei die in den Figuren 1a bis 1d gezeigten Formteile form- schlüssig aufeinander liegen und eine Formkavität begrenzen,
- Figur 4: eine modifizierte Gießwerkzeuganordnung, etwa ent- sprechend Figur 1d, mit einem zweiten Lichtleitkör- per, der zweilagig bzw. zweischichtig mit unter- schiedlich farbigem Kunststoffmaterial gespritzt ist,
- Figur 5: eine Querschnittsansicht eines dritten Lichtleit- körpers mit Prismenflächen und einer Linse, und
- Figur 6: eine Anordnung mit zwei dritten Lichtleitkörpern gemäß Figur 5.

Eine Kunststoffspritzvorrichtung 10 zur Herstellung von ersten Lichtleitkörpern 11, beispielsweise Regensensoren, Lichtleitern zur Führung von Licht in Richtung von Anzeigeelementen oder dergleichen, hat eine Gießwerkzeuganordnung 12, mit der eine erste und eine zweite Formkavität 13, 14 begrenzbar sind. In die Formkavität 13, 14 wird Kunststoffmaterial 15, 16, z.B. jeweils Polycarbonat, lagenweise bzw. schichtweise mit Hilfe einer Einspritzanordnung 17 sequentiell eingespritzt, wobei sich die Kunststoffmaterialien 15, 16 im Wesentlichen homogen verbindeen, so dass man im Grunde genommen bei dem Lichtleitkörper 11 von einem einzigen Kunststoffmaterial 15 oder 16 sprechen kann.

Die Kunststoffspritzvorrichtung 10 ist in der Figur nur schematisch dargestellt und hat teilweise Komponenten an sich bekannter Spritzgussmaschinen.

Die Gießwerkzeuganordnung 12 enthält eine Schließeinheit 18 mit Platten 19, 20, die man auch als Düsenplatte 20 bzw. Auswerferplatte oder Schließplatte 19, bezeichnen kann. Die Düsenplatte 19 ist beispielsweise feststehend, während die Schließplatte 20 relativ zu der Düsenplatte 19 beweglich ist. Ein Linearantrieb 21, beispielsweise ein Hydraulikzylinder und/oder Elektroantrieb, betätigt zweckmäßigerweise über eine Formschlussmechanik, beispielsweise eine Kniehebelanordnung, die Schließplatte 19 linear in einer Längsrichtung 22 zu der Düsenplatte 20 hin oder von dieser weg.

Ein Drehantrieb 23, z.B. ein Elektromotor oder, wie in der Figur schematisch angedeutet, ein über ein nicht dargestelltes Getriebe angelenkter Linearantrieb, betätigt die Schließplatte 20 in einer Rotationsrichtung 24. Die Antriebe 21, 23 bilden eine Antriebsanordnung 25. Die Antriebe 21, 23 bilden ferner Positioniermittel 26 zur Positionierung der Platten 20, 19 zueinander und somit Positioniermittel 26 zur relativen Positionierung von ersten, zweiten und dritten Formteilen 27, 27', 28 und 29, die an den Platten 19, 20 angeordnet sind.

Die ersten Formteile 27, 27' sind an der Düsenplatte 19 und die zweiten und dritten Formteile 28, 29 an der Schließplatte 20 angeordnet. Die Positioniermittel 26 positionieren die Formteile 27 bis 29 durch Linear- und Drehbewegungen derart, dass je ein zweites und drittes Formteil 28, 29 auf den beiden ersten Formteilen 27, 27' zur Bildung der ersten und zweiten Formkavitäten 13, 14 zu liegen kommt. Die ersten Formteile 27, 27' sind baugleich. Durch die ersten und zweiten Formteile 27, 28 wird die erste Formkavität 13 begrenzt. Wenn nunmehr das dritte Formteil 29 auf dem jeweils freien ersten Formteil 27 oder 27' positioniert wird, wird dadurch die zweite, gegenüber der ersten Formkavität 13 vergrößerte zweite Formkavität 14 gebildet.

Ein Spritzvorgang verläuft folgendermaßen:

Zunächst spritzt eine Einspritzeinrichtung 30 der Einspritzanordnung 17, die man auch als eine Spritzeinheit bezeichnen kann, das Kunststoffmaterial 15 durch einen Spritzkanal 31 des ersten Formteils 27 in die erste Formkavität 13 ein, die durch die Formteile 27, 28 begrenzt ist. Anstelle des Spritzkanals 31 oder zusätzlich zu diesem können auch weitere Spritzkanäle an den Formteilen 27 und/oder 28 vorgesehen sein, beispielsweise ein schematisch angedeuteter Spritzkanal 32, der zu einem Linsenabschnitt 33 der ersten Formkavität 13 führt. Der Spritzkanal 31 führt zu einem Kanalabschnitt oder Leiterabschnitt 34 der ersten Formkavität 13.

Das aus dem Spritzkanal 31 in die erste Formkavität 13 eindringende Kunststoffmaterial 15 gelangt über den Kanal-/Leiterabschnitt 34 zu dem Linsenabschnitt 33 an einem Ende des Leiterabschnitts 34 sowie zu einem zweiten Linsenabschnitt 33' am andern, entgegengesetzten Ende des Leiterabschnitts 34. Die Linsenabschnitte 33, 33' sind Formabschnitte zur Formung von Linsen 35, beispielsweise Sammellinsen oder Streulinsen, die Licht von und zu einem Leiterabschnitt 36 leiten, der durch den Leitkanal oder Leiterabschnitt 34 der Formkavität 13 zumindest teilweise geformt wird. Der Spritzkanal 31 mündet zweckmäßigerweise zentral in den Leiterabschnitt 34.

Durch Einspritzen des Kunststoffmaterials 15 in die erste Formkavität 13 wird ein Spritzling 37 gebildet. Der Spritzling 37 bildet eine erste Lage 38 des später vollständig gespritzten Lichtleitkörpers 11.

Der Spritzling 37 kühlt in der ersten Formkavität 13 ab. Dabei kühlt ein Oberflächenbereich 39 maximal bis zu einer Grenzetemperatur Tgr ab, bei der der Oberflächenbereich 39 bindungsfähig zur Verbindung mit dem zweiten Kunststoffmaterial 16 ist. Bei der Kunststoffspritzvorrichtung 10 wird dies dadurch erreicht, dass das zweite Formteil 28 mit einer vorbestimmten Auswechselgeschwindigkeit gegen das dritte Formteil 29 ausgewechselt wird. Die Positioniermittel 26 positionieren dazu das dritte Formteil 29 sehr schnell an dem jeweiligen ersten Formteil 27 oder 27', an dem zuvor das zweite Formteil 28 vorhanden war. Die Positioniermittel 26 öffnen beispielsweise die Platten 19, 20, rotieren die Platte 20, bis die Formteile 27 und 28 sowie 27' und 29 (oder umgekehrt) einander gegenüberstehen, und drükken dann die Platte 20 wieder an die Platte 19. Der Spritzling 37 verbleibt in dem jeweiligen ersten Formteil 27 oder 27'.

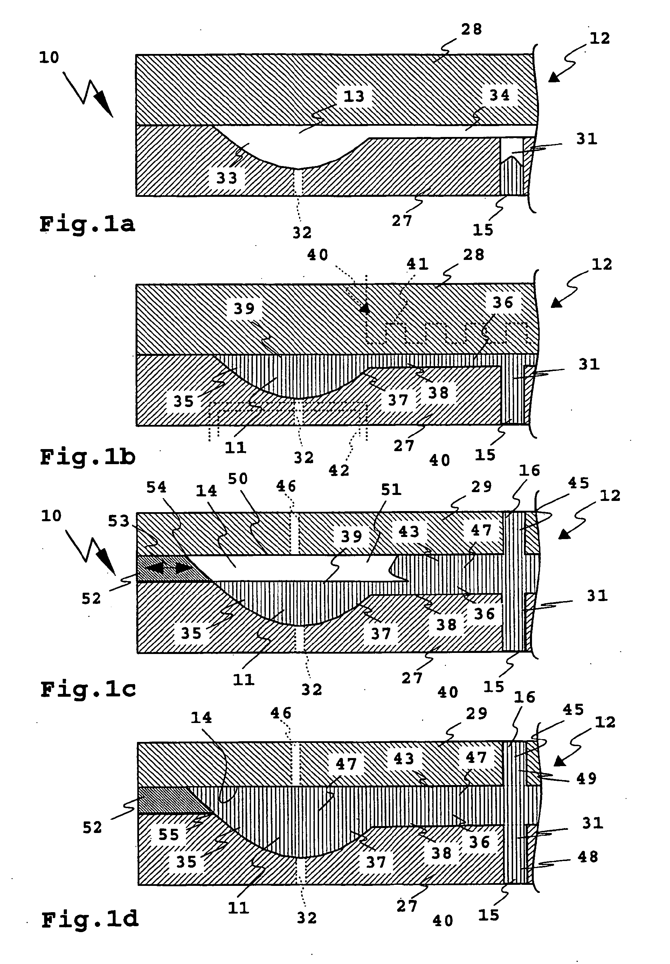

Figur 1c zeigt das anstelle des zweiten Formteils 28 an dem ersten Formteil 27 positionierte Formteil 29. Das dritte Formteil 29 hat einen Linsenabschnitt 50 sowie einen Leiterabschnitt oder Kanalabschnitt 51, die zusammen mit dem Linsenabschnitt 33 und dem Leiterabschnitt 34 des ersten Formteils 27 oder 27' Kavitätsbereiche zur Ausbildung der Linsen 35 bzw. des Licht-Leiterabschnitts 34 bilden. Ferner ist an dem Formteil 28 ein in einer Längsrichtung 53 beweglicher Schieber 52 vorhanden, der die Entformung eines Hinterschnittbereiches 54 am Linsenabschnitt 50 ermöglicht.

Zumindest außerhalb des Oberflächenbereiches 39 ist der Spritzling 37 im Wesentlichen formstabil, wenn die Formteile 28, 29 gewechselt werden.

Zur Einstellung der Grenztemperatur Tgr können optional Temperiermittel 40 zur Einstellung der Grenztemperatur Tgr an dem Oberflächenbereich 39, z.B. eine elektrische Heizungseinrichtung 41 im Bereich des Leiterabschnitts 4. Eine Kühlungseinrichtung 42 der Temperiermittel 40, beispielsweise ein Kühlkanal, kühlt den Spritzling 37 im Bereich des Linsenabschnitts 33 an der dem Oberflächenbereich 39 abgewandten Seite, so dass der Spritzling 37 dort im Wesentlichen formstabil ist.

Diese Maßnahmen sind jedoch bei der Kunststoffspritzvorrichtung 10 optional, weil die Positioniermittel 26 bereits dafür sorgen, dass im Rahmen einer geeignet schnellen Dreh- und/oder Verschiebeoperation die zweite, größere Formkavität 14 zum Einspritzen einer zweiten Lage oder Schicht 43 mit dem Kunststoffmaterial 16 bereitsteht, wenn der Oberflächenbereich die Grenztemperatur Tgr noch nicht unterschritten hat.

Eine Einspritzeinrichtung 44 der Einspritzanordnung 17, beispielsweise eine Schneckenspritzeinheit, die aus Granulat des Kunststoffmaterials 16 ein plastifiziertes Kunststoffmaterial 16 bildet, spritzt das Kunststoffmaterial 16 durch einen Spritzkanal 45 und/oder einen Spritzkanal 46 in den oberen Bereich der zweiten Formkavität 14 ein. Da der Oberflächenbereich 39 noch nicht fest gebunden ist, verbinden sich die Kunststoffmaterialien 15, 16, die vorliegend identisch sind, an dem Oberflächenbereich 39 derart, dass ein lichtdurchlässiges, zumindest im Wesentlichen lichtbrechungsfreies Innenvolumen 47 des Lichtleitkörpers 11 gebildet ist. Mit anderen Worten löst sich der Oberflächenbereich 39 bei dem Einspritzen der zweiten Lage oder Schicht 43 homogen in dem Innenvolumen 47 auf. Das Innenvolumen 47 füllt übergangslos die Linsen 35 und den diese verbindenden Leiterabschnitt 36 aus. Dies wird insbesondere in Figur 1d deutlich. Die Lagen 38, 43 sind zumindest im Bereich der Linsen 35 in einer Lichtdurchgangsrichtung des die Linsen 35 später durchdringenden Lichts aufeinander angeordnet.

Die erste Kunststoff-Lage 38 hat verhältnismäßig schnell die Grenztemperatur erreicht, bei der die zweite Lage 43 an den Spritzling 37 angespritzt werden kann, weil der Spritzling 37 im Vergleich zum vollständigen Lichtleitkörper 11 ein verkleinertes Volumen hat. Nachdem der Lichtleitkörper 11 vollständig gespritzt ist (Figur 1d), wird er aus der Gießwerkzeuganordnung 12 entnommen, wofür beispielsweise zunächst der Schieber 52 entlang der Längsrichtung 53 vom Lichtleitkörper 11 weg verstellt und dann die Platte 20 von der Platte 19 entfernt wird. Nicht dargestellte Auswerfereinrichtungen, z.B. Pneumatik- oder Hydraulikzylinder, an den Platten 19 und/oder 20 stoßen den Lichtleitkörper 11 aus den Formteilen 29 einerseits und/oder den Formteilen 27, 27' andererseits aus.

Die Lagen 38 und 43 grenzen auch an einem Außenbereich 55 der Linse 35 aneinander, ohne die optische Qualität der Linse 35 in diesem Bereich 55 zu beeinträchtigen. Im Grunde sind die Lagen 38 und 43 zu einer einzigen Linse 35 verschmolzen.

Im Innenvolumen 47 ist der Lichtleitkörper 11 homogen und im Wesentlichen lichtbrechungsfrei lichtdurchlässig. An seinem Außenumfang, insbesondere am Übergangsbereich zwischen den Formteilen 27, 27' einerseits und an dem Formteil 29 andererseits kann ein Grat entstehen, der bei Bedarf im Rahmen einer Nachbehandlung abgeschliffen werden kann.

Die Kunststoffmaterialien 15, 16 bleiben in den Spritzkanälen 31, 45 plastisch, weil der Lichtleitkörper 11 verhältnismäßig schnell fertiggestellt ist. In den Spritzkanälen 31, 45 verbleiben plastische Seelen, so dass allenfalls kurze Angüsse 48, 49 an dem Lichtleitkörper 11 bzw. dessen Spritzling 37 verbleiben, die in einem Nachbearbeitungsschritt entfernt werden müssen. In der Praxis hat es sich aber gezeigt, dass die Angüsse 48, 49 bei einer geeigneten Prozessgeschwindigkeit nicht entstehen.

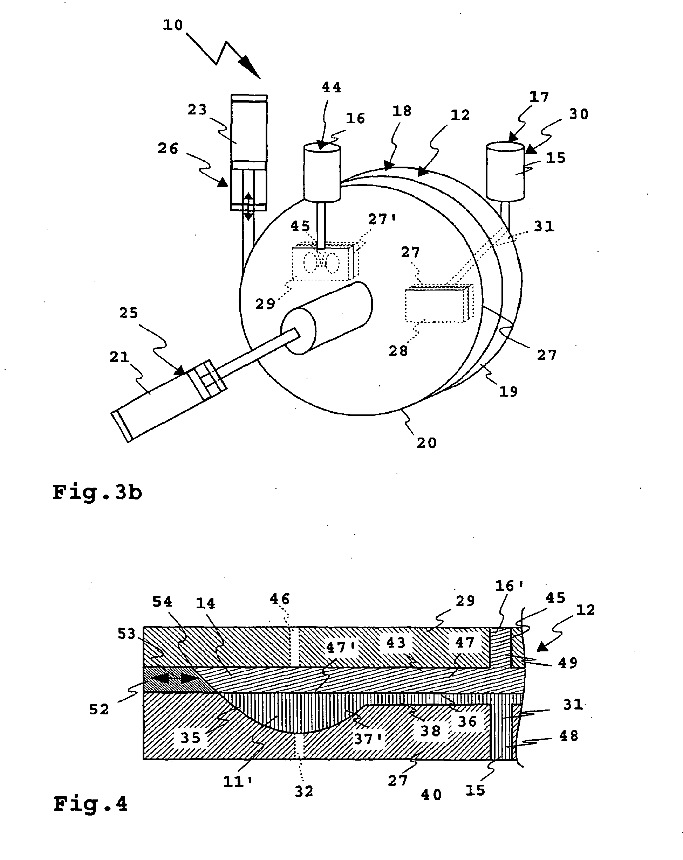

Mit der Kunststoffspritzvorrichtung 10 ist es auch möglich, transparente, lichtleitende Kunststoffe gleichen Typs, jedoch unterschiedlicher Farbe so aneinander zu spritzen, dass ein im Wesentlichen lichtbrechungsfreies Innenvolumen des jeweiligen Spritzlings 37' gebildet ist. Dies ist in Figur 4 angedeutet. Anstelle des mit dem Kunststoffmaterial 15 identischen Kunststoffmateriales wird ein Kunststoffmaterial 16' für den Spritzling 37' bzw. Lichtleitkörper 11' verwendet. Die Kunststoffmaterialien 15, 16' sind zwar beides beispielsweise Polykarbonate (PC), jedoch ist beispielsweise der Kunststoff 15 im Wesentlichen farbneutral, das Kunststoffmaterial 16' jedoch blau, grün, rot oder in einer sonstigen Farbe eingefärbt. Im Bereich des Innenvolumens 47' gehen die Kunststoffmaterialien 15, 16 lichtdurchgängig und im Wesentlichen lichtbrechungsfrei ineinander über.

Ein Lichtleitkörper 111 bildet einen Bestandteil eines Regensensors 112, beispielsweise zum Einbau in ein Kraftfahrzeug. Bei dem Lichtleitkörper 111 sind Kunststoffmaterialien 115, 116 und 117 lagenweise in erfindungsgemäßer Weise in der oben beschriebenen Art aneinandergespritzt. Das Kunststoffmaterial 115-117 ist z.B. PC (Polycarbonat), PMMA, PA, COC oder dergleichen, das während des Aneinanderspritzens nur bis zu seiner Grenztemperatur auskühlt, bei der ein homogener, lichtbrechungsfreier Übergang zwischen Lagen 118, 119 und 120 möglich ist, die durch das Kunststoffmaterial 115, 116 und 117 gebildet sind. Beispielsweise kühlt das Polycarbonat nur bis zu einem Temperaturbereich von 90° bis 120° Celsius ab.

Die Lagen 118 und 119 bestehen beispielsweise aus transparenterm, glasklarem Kunststoffmaterial. Ein Übergangsbereich 126 zwischen den Lagen 118 und 119 ist in der Praxis nicht erkennbar, das heißt das Innenvolumen 147 des Lichtleitkörpers 111 weist keine lichtbrechende Schichtung auf. Zur Verdeutlichung der Schichtung sind in der Zeichnung die Lagen 118-120 unterschiedlich schraffiert dargestellt. Gestrichelte Linien im Übergangsbereich 126 sowie einem Übergangsbereich 125 zwischen den Lagen 119 und 120 sollen allerdings verdeutlichen, dass die Lagen 118, 119 und 120 zumindest im Bereich des Innenvolumens 146 lichtbrechungsfrei ineinander übergehen.

Das Kunststoffmaterial 117 der oberen dritten Lage oder Schicht 120 ist beispielsweise eingefärbt, z.B. rot.

Eine nur schematisch angedeutete Lichtquelle 113 erzeugt einen Lichtstrahl 123, vorzugsweise einen Infrarot-Lichtstrahl, der zunächst eine Scheibe 121 eines Kraftfahrzeuges durchdringt und an der Oberfläche der dritten Lage 120 in den Lichtleitkörper 111 eintritt.

Am erfindungsgemäß homogenen Übergangsbereich 125 zwischen der dritten und zweiten Lage 120, 119 wird der Lichtstrahl 123 nicht gebrochen oder umgelenkt.

Im Bereich einer Prismenfläche 127 wird der Lichtstrahl 123 umgelenkt. Die Prismenfläche 127 bildet einen Bestandteil eines Prismas 129 des Lichtleitkörpers 111.

Der Lichtleitkörper 111 umfasst optischen Funktionselemente 136, z.B. das Prisma 129 sowie eine Linse 130. Die Linse 130 sowie Prismenflächen 127, 128 bilden oder umfassen lichtlenkende Bereiche 135.

Die Linse 130 ist durch die untere, erste Lage 118 gebildet. Der Übergangsbereich 126 zwischen der ersten und zweiten Lage 118 und 119 verläuft allerdings bis zur Prismenfläche 127. Aufgrund der homogenen, lichtbrechungsfreien Verbindung zwischen den Lagen 118 und 119 hat dies allerdings keinen negativen optischen Effekt. In der Zeichnung trifft der Lichtstrahl 123 zwar in einem Auftreffbereich 113 auf die Prismenfläche 127 auf. Aber auch wenn der Lichtstrahl 123 in der Zeichnung weiter oben bei einer Prismenfläche 132 auftreffen würde, wo die Lagen 118 und 119 aneinandergrenzen, würde dies den Strahlverlauf des Lichtstrahles nicht negativ beeinträchtigen.

Der Lichtstrahl 123 wird nach Umlenkung durch die Prismenfläche 127 ferner an einer Prismenfläche 128 umgelenkt und durchläuft ein zweites Mal bei 133 brechungsfrei den Übergangsbereich 126, bevor er durch die Linse 130 hindurch auf einen Sensor 124 auftritt.

Der Lichtleitkörper 111 ist in einem schematisch dargestellten Halter 122 gehaltert, der beispielsweise aus einem dunklen Kunststoffmaterial besteht. Dies verstärkt eine Reflektion von Lichtstrahlen an den Prismenflächen 127, 128.

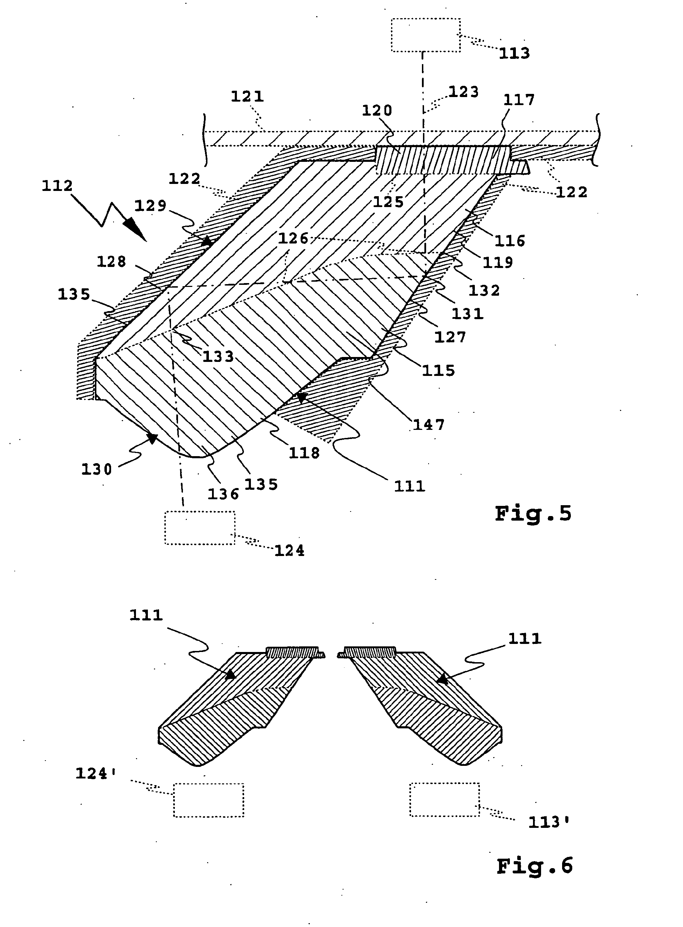

Der Sensor 124 sowie die Lichtquelle 113 sind nur schematisch dargestellt. Es versteht sich, dass beispielsweise zwei Lichtleitkörper 111 in einer spiegelsymmetrischen Anordnung angeordnet sein können (Figur 6) wobei an einem Lichtleitkörper 111 eine Lichtquelle 113' und dem anderen Lichtleitkörper 111 ein Sensor 124' angeordnet ist.

Es versteht sich, dass Abwandlungen der Erfindung ohne Weiteres möglich sind. Beispielsweise können sämtliche zu den unterschiedlich großen Formkavitäten führenden Spritzkanäle in einem einzigen Formteil, beispielsweise auf der jeweiligen Düsenseite ausgebildet sein. So wäre es z.B. denkbar, dass in dem zweiten Formteil 28 Spritzkanäle zum Spritzen der ersten Lage 38 des Lichtleitkörpers 11 vorhanden sind.

## Patentansprüche

1. Verfahren zur Herstellung eines Lichtleitkörpers (11; 11'; 111) aus lichtdurchlässigem Kunststoffmaterial (15; 115-117), bei dem das Kunststoffmaterial (15; 115-117) in eine erste leere Formkavität (13) zwischen ein erstes und ein zweites Formteil (27, 27', 28) einer Gießwerkzeuganordnung (12) zur Bildung eines Spritzlings (37) eingespritzt wird, mit den Schritten:
- Abkühlen des Spritzlings (37), bis das Kunststoffmaterial (15; 115-117) an mindestens einem Oberflächenbereich (39) des Spritzlings (37) maximal in den Bereich einer Grenztemperatur (Tgr) in einem Bereich von 80 bis 150 Grad Celsius abgekühlt ist, in dem der mindestens eine Oberflächenbereich (39) bindungsfähig zur Verbindung mit weiterem lichtdurchlässigem Kunststoffmaterial (16) ist,
- Anordnen des Spritzlings (37; 37') in mindestens einer zweiten, gegenüber der ersten Formkavität (13) größeren Formkavität (14), und
- Anspritzen mindestens einer zweiten Lage (43; 119, 120) aus lichtdurchlässigem Kunststoffmaterial (16) an den mindestens einen bindungsfähigen Oberflächenbereich (39), wobei sich die lichtdurchlässigen Kunststoffmaterialien (15, 16) an dem mindestens einen Oberflächenbereich (39) im wesentlichen homogen verbinden, so dass der mindestens eine Oberflächenbereich (39) in einem lichtdurchlässigen, zumindest im wesentlichen lichtbrechungsfreien Innenvolumen (47; 47'; 147) des Spritzlings (37; 37') aufgelöst wird, wobei der Spritzling (37; 37') in dem ersten Formteil bis zum Anordnen des Spritzlings (37; 37') in der mindestens einen zweiten Formkavität (14) bleibt, wobei zum Anordnen des Spritzlings (37; 37') in der mindestens einen zweiten größeren Formkavität (14) das erste Formteil (27, 27') und ein drittes Formteil (29) anstelle des zweiten Formteils (28) relativ zueinander positioniert werden oder eine Kontur des ersten und/oder des zweiten Formteils (27, 27', 28) zur Vergrößerung der ersten Formkavität (13) zu der mindestens einen zweiten Formkavität (14) verändert werden.

2. Verfahren nach Anspruch 1, **dadurch gekennzeichnet, dass** zum Anordnen des Spritzlings (37; 37') in der mindestens einen zweiten größeren Formkavität (14) das erste Formteil (27, 27') und das dritte Formteil (29) anstelle des zweiten Formteils (28) durch Drehen oder Verschieben des ersten Formteils (27, 27') und/oder des dritten Formteils (29) relativ zueinander positioniert werden.

3. Verfahren nach einem der vorhergehenden Ansprüche, **dadurch gekennzeichnet, dass** die Schritte
- Anordnen des Spritzlings (37; 37') in einer größeren Formkavität (14) und
- Anspritzen weiterer Kunststoffmaterialien (16) an in den Bereich der Grenztemperatur (Tgr) abgekühlte, bindungsfähige Oberflächenbereiche (39) zur im wesentlichen homogen, lichtdurchlässigen Verbindung mindestens einmal wiederholt werden.

4. Verfahren nach einem der vorhergehenden Ansprüche, **gekennzeichnet durch** Verwendung unterschiedlich farbiger Kunststoffmaterialien (15, 16).

5. Verfahren nach einem der vorhergehenden Ansprüche, **dadurch gekennzeichnet, dass** die Grenztemperatur (Tgr) in einem Bereich von etwa 90 bis 120 Grad Celsius oder etwa 100 bis 120 Grad, liegt.

6. Verfahren nach einem der vorhergehenden Ansprüche, **dadurch gekennzeichnet, dass** der Spritzling (37; 37') vor dem Anspritzen der mindestens einen zweiten Kunststoff-Lage (43; 119, 120) zumindest außerhalb des mindestens einen bindungsfähigen Ober-flächenbereichs (39) im wesentlichen formstabil ist.

7. Verfahren nach einem der vorhergehenden Ansprüche, **gekennzeichnet durch** Verwendung Kunststoff eines gleichen Typs, insbesondere jeweils Cycloolefin-Copolymer (COC) oder Polymethylmethacrylat (PMMA) oder Polyamid (PA) oder Polycarbonat (PC) für die mindestens zwei homogen und zumindest im wesentlichen lichtbrechungsfrei verbundene Kunststoff-Lagen (38, 43; 118-120).

8. Verfahren nach einem der vorhergehenden Ansprüche, **dadurch gekennzeichnet, dass** der Lichtleitkörper (11; 11'; 111) zur Verwendung als ein Lichtleitkörper für einen Sensor (124), insbesondere einen Regensensor oder einen Lichtsensor, hergestellt wird.

9. Kunststoffspritzvorrichtung zur Herstellung eines Lichtleitkörpers (11; 11'; 111) aus lichtdurchlässigem Kunststoffmaterial (15; 115-117),
- mit einer Gießwerkzeuganordnung (12), die ein erstes und mindestens ein zweites Formteil (27, 27', 28) (28) aufweist, die eine erste Förmkavität (13) zur Bildung eines Spritzlings (37; 37'), begrenzen,
- und mit einer Einspritzanordnung (17) zum Einspritzen des Kunststoffmaterials (15; 115-117) in die vor dem Einspritzen leere erste Formkavität (13),
- wobei die Gießwerkzeuganordnung (12) Positioniermittel (26) zur Bildung mindestens einer zweiten, gegenüber der ersten Formkavität (14) größeren Formkavität aufweist , **dadurch gekennzeichnet, dass** die Positioniermittel (26) zur Bereitstellung der zweiten, größeren Formkavität (14) zum Einspritzen einer zweiten Lage oder Schicht (43) von Kunststoffmaterial (15; 115-117) an mindestens einen Oberflächenbereich (39) des bei dem Vergrößern der ersten Formkavität (13) in dem ersten Formteil (27, 27') verbleibenden Spritzlings (37; 37') anhand einer geeignet schnellen Dreh- und/oder Verschiebeoperation ausgestaltet sind, bei der die Positioniermittel (26) das erste Formteil (27, 27') und ein drittes Formteil (29) anstelle des zweiten Formteils (28) relativ zueinander positionieren oder eine Kontur des ersten und/oder des zweiten Formteils (27, 27', 28) zur Vergrößerung der ersten Formkavität (13) zu der mindestens einen zweiten Formkavität (14) verändern, so dass der mindestens eine Oberflächenbereich (39) maximal in den Bereich einer Grenztemperatur (Tgr) in einem Bereich von 80 bis 150 Grad Celsius abkühlt, bei dem der mindestens eine Oberflächenbereich (39) bindungsfähig zur Verbindung mit weiterem lichtdurchlässigem Kunststoffmaterial (16) ist, und dass die Einspritzanordnung (17) zum Anspritzen mindestens einer zweiten Lage (43; 119, 120) aus lichtdurchlässigem Kunststoffmaterial (16) an den mindestens einen bindungsfähigen Oberflächenbereich (39) ausgestaltet ist, wobei sich die lichtdurchlässigen Kunststoffmaterialien (15, 16) an dem mindestens einen Oberflächenbereich (39) im wesentlichen homogen verbinden, so dass der mindestens eine Oberflächenbereich in einem lichtdurchlässigen, zumindest im wesentlichen lichtbrechungsfreien Innenvolumen (47; 47'; 147) des Spritzlings (37; 37') aufgelöst wird.

10. Kunststoffspritzvorrichtung nach Anspruch 9, **dadurch gekennzeichnet, dass** die Positioniermittel (26) zum Drehen oder zum Verschieben des ersten und des dritten Formteils (27, 27', 29) zueinander ausgestaltet sind, die die mindestens eine zweite Formkavität (14) bilden.

11. Kunststoffspritzvorrichtung nach Anspruch 9 oder 10, **dadurch gekennzeichnet, dass** das erste und/oder das zweite Formteil (27, 27', 28) einen beweglichen Kernabschnitt aufweisen, und die Positioniermittel (26) zur Positionierung des beweglichen Kernabschnitts im Sinne einer Vergrößerung der ersten Formkavität zu der mindestens einen zweiten Formkavität (14) ausgestaltet sind.

12. Kunststoffspritzvorrichtung nach Anspruch 9, 10 oder 11, **dadurch gekennzeichnet, dass** sie Temperiermittel (40) zur Temperierung des Spritzlings (37; 37') aufweist.

13. Kunststoffspritzvorrichtung nach Anspruch 12, **dadurch gekennzeichnet, dass** die Temperiermittel (40) zur Einstellung der Grenztemperatur (Tgr) an dem mindestens einen bindungsfähigen Oberflächenbereich (39) und/oder zur Abkühlung des Spritzlings (37; 37') unter die Grenztemperatur (Tgr) in Bereichen außerhalb des mindestens einen bindungsfähigen Oberflächenbereichs (39) ausgestaltet sind.

## Claims

1. Method for the production of a light-conducting body (11; 11'; 111) from a transparent plastic material (15; 115-117), wherein the plastic material (15; 115-117) is injected into a first mould cavity (13) between a first and a second moulding (27, 27', 28) of a casting tool arrangement (12) to form an injection-moulded part (37), comprising the steps of:
- cooling the injection-moulded part (37) until the plastic material (15; 115-117) is cooled in at least one surface region (39) of the injection-moulded part (37) maximally to a range of a limit temperature (Tgr) between 80 and 150 degrees Celsius, at which the at least one surface region (39) is bondable for bonding to a further transparent plastic material (16),
- placing the injection-moulded part (37; 37') in at least one second mould cavity (14) which is larger than the first mould cavity (13), and
- injection-moulding at least one second layer (43; 119, 120) of transparent plastic material (16) to the at least one bondable surface region (39), wherein the transparent plastic materials (15, 16) bond substantially homogeneously in the at least one surface region (39), so that the at least one surface region (39) is dissolved in a transparent, at least substantially non-refractive inner volume (47; 47'; 147) of the injection-moulded part (37; 37'), wherein the injection-moulded part (37; 37') remains in the first moulding until the injection-moulded part (37; 37') is placed in the at least one second mould cavity (14), wherein, in order to place the injection-moulded part (37; 37') in the at least one second, larger, mould cavity (14), the first moulding (27, 27') and a third moulding (29) instead of the second moulding (28) are positioned relative to one another, or a contour of the first and/or of the second moulding (27, 27', 28) is changed to increase the size of the first mould cavity (13) to that of the at least one second mould cavity (14).

2. Method according to claim 2, **characterised in that**, in order to place the injection-moulded part (37; 37') in the at least one second, larger, mould cavity (14), the first moulding (27, 27') and the third moulding (29) instead of the second moulding (28) are positioned relative to one another by turning or displacing the first moulding (27, 27') and/or the third moulding (29).

3. Method according to any of the preceding claims, **characterised in that** the steps of
- placing the injection-moulded part (37; 37') in a larger mould cavity (14) and
- injection-moulding further plastic materials (16) to the bondable surface region (39) cooled to a range of the limit temperature (Tgr) to form a substantially homogeneous, transparent bond
are repeated at least once.

4. Method according to any of the preceding claims, **characterised by** the use of plastic materials (15, 16) of different colours.

5. Method according to any of the preceding claims, **characterised in that** the limit temperature (Tgr) lies in a range of approximately 90 to 120 degrees Celsius or approximately 100 to 120 degrees Celsius.

6. Method according to any of the preceding claims, **characterised in that** the injection-moulded part (37; 37') is substantially dimensionally stable at least outside the at least one bondable surface region (39) before the at least one second plastic layer (43; 119, 120) is injection-moulded onto it.

7. Method according to any of the preceding claims, **characterised by** the use of plastic materials of the same type, in particular cycloolefin copolymer (COC) or polymethyl methacrylate (PMMA) or polyamide (PA) or polycarbonate (PC), for the at least two plastic layers (38, 43; 118-120) which are bonded homogeneously and at least substantially non-refractively.

8. Method according to any of the preceding claims, **characterised in that** the light-conducting body (11; 11'; 111) is produced for use as a light-conducting body for a sensor (124), in particular a rain sensor or a light sensor.

9. Plastic injection moulding device for the production of a light-conducting body (11; 11'; 111) from a transparent plastic material (15; 115-117),
- comprising a casting tool arrangement (12) having a first and at least one second moulding (27, 27', 28) which bound a first mould cavity (13) for producing an injection-moulded part (37; 37'), and
- an injection arrangement (17) for injecting the plastic material (15; 115-117) into the first mould cavity (13), which is empty before injection,
- wherein the casting tool arrangement (12) comprises positioning means (26) for forming at least one second mould cavity (14) which is larger than the first mould cavity,
**characterised in that** the positioning means (26) for providing the second, larger, mould cavity (14) are configured for injecting a second layer (43) of plastic material 15; 115-117) onto at least one surface region (39) of the injection-moulded part (37; 37') remaining in the first moulding (27, 27') while the first mould cavity (13) is enlarged, using a fast rotary and/or displacement operation, wherein the positioning means (26) position the first moulding (27, 27') and a third moulding (29) instead of the second moulding (28) relative to one another, or change a contour of the first and/or the second moulding (27, 27', 28) to increase the size of the first mould cavity (13) to that of the at least one second mould cavity (14), so that the at least one surface region (39) cools maximally to a range of a limit temperature (Tgr) between 80 and 150 degrees Celsius, at which the at least one surface region (39) is bondable for bonding to a further transparent plastic material (16), and **in that** the injection arrangement (17) is designed for injection-moulding at least one second layer (43; 119, 120) of transparent plastic material (16) onto the at least one bondable surface region (39), wherein the transparent plastic materials (15, 16) bond substantially homogeneously at the at least one surface region (39), so that the at least one surface region is dissolved in a transparent, at least substantially non-refractive inner volume (47; 47'; 147) of the injection-moulded part (37; 37').

10. Plastic injection moulding device according to claim 9, **characterised in that** the positioning means (26) are designed for turning or displacing the first and the third mouldings (27, 27', 29) which form the at least one second mould cavity (14) relative to each other.

11. Plastic injection moulding device according to claim 9 or 10, **characterised in that** the first and/or the second moulding (27, 27', 28) have a movable core section, and **in that** the positioning means (26) are designed for positioning the movable core section to increase the size of the first mould cavity to that of the at least one second mould cavity (14).

12. Plastic injection moulding device according to claim 9, 10 or 11, **characterised in that** it comprises temperature control means (40) for controlling the temperature of the injection-moulded part (37; 37').

13. Plastic injection moulding device according to claim 12, **characterised in that** the temperature control means (40) are designed for adjusting the limit temperature (Tgr) at the at least one bondable surface region (39) and/or for cooling the injection-moulded part (37; 37') below the limit temperature (Tgr) in regions outside the at least one bondable surface region (39).

## Revendications

1. Procédé de fabrication d'un guide de lumière (11 ; 11'; 111) en matière plastique transparente (15 ; 115-117), dans lequel la matière plastique (15 ; 115-117) est injectée dans une première cavité vide du moule (13) entre un premier et un deuxième élément de moule (27, 27', 28) d'un ensemble d'outils de coulée (12) pour former une pièce moulée par injection (37), comprenant les étapes consistant à :
- refroidir la pièce moulée par injection (37) jusqu'à ce que la matière plastique (15 ; 115-117) soit refroidie au niveau d'au moins une zone de surface (39) de la pièce moulée par injection (37) au maximum dans la plage d'une température limite (Tgr) dans une plage de 80 à 150 degrés Celsius, dans laquelle l'au moins une zone de surface (39) est apte à la liaison pour la combinaison à une autre matière plastique transparente (16),
- agencer la pièce moulée par injection (37 ; 37') dans au moins une deuxième cavité du moule (14) plus grande que la première cavité du moule (13), et
- mouler par injection au moins une deuxième couche (43 ; 119, 120) en matière plastique transparente (16) sur l'au moins une zone de surface (39) apte à la liaison, dans lequel les matières plastiques transparentes (15, 16) se combinent de manière essentiellement homogène à l'au moins une zone de surface (39), si bien que l'au moins une zone de surface (39) se dissout dans un volume interne (47 ; 47' ; 147) transparent, du moins essentiellement non réfringent, de la pièce moulée par injection (37 ; 37'), dans lequel la pièce moulée par injection (37 ; 37') reste dans le premier élément de moule jusqu'à ce que la pièce moulée par injection (37 ; 37') soit agencée dans l'au moins une deuxième cavité du moule (14), dans lequel pour agencer la pièce moulée par injection (37 ; 37') dans l'au moins une deuxième cavité du moule (14) plus grande, le premier élément de moule (27, 27') et un troisième élément de moule (29) à la place du deuxième élément de moule (28) sont positionnés l'un par rapport à l'autre ou un contour du premier et/ou du deuxième élément de moule (27, 27', 28) est modifié pour agrandir la première cavité du moule (13) par rapport à l'au moins une deuxième cavité du moule (14).

2. Procédé selon la revendication 1, **caractérisé en ce que** pour agencer la pièce moulée par injection (37 ; 37') dans l'au moins une deuxième cavité du moule (14) plus grande, le premier élément de moule (27, 27') et le troisième élément de moule (29) à la place du deuxième élément de moule (28) sont positionnés l'un par rapport à l'autre par rotation ou déplacement du premier élément de moule (27, 27') et/ou du troisième élément de moule (29).

3. Procédé selon l'une quelconque des revendications précédentes, **caractérisé en ce que** les étapes consistant à
- agencer la pièce moulée par injection (37 ; 37') dans une cavité du moule (14) plus grande et
- mouler par injection d'autres matières plastiques (16) sur des zones de surface (39) aptes à la liaison, refroidies dans la plage de la température limite (Tgr) pour une combinaison transparente essentiellement homogène sont répétées au moins une fois.

4. Procédé selon l'une quelconque des revendications précédentes, **caractérisé par** l'utilisation de matières plastiques (15, 16) de différentes couleurs.

5. Procédé selon l'une quelconque des revendications précédentes, **caractérisé en ce que** la température limite (Tgr) se trouve dans une plage d'environ 90 à 120 degrés Celsius ou d'environ 100 à 120 degrés.

6. Procédé selon l'une quelconque des revendications précédentes, **caractérisé en ce que** la pièce moulée par injection (37 ; 37') est essentiellement indéformable avant le moulage par injection de l'au moins une deuxième couche de plastique (43 ; 119, 120) du moins en dehors de l'au moins une zone de surface (39) apte à la liaison.

7. Procédé selon l'une quelconque des revendications précédentes, **caractérisé par** l'utilisation de plastique d'un même type, en particulier de cyclo-oléfine copolymère (COC) ou polyméthacrylate de méthyle (PMMA) ou polyamide (PA) ou polycarbonate (PC) pour les couches de plastique (38, 43 ; 118-120) au moins au nombre de deux combinées de manière homogène et du moins essentiellement non réfringente.

8. Procédé selon l'une quelconque des revendications précédentes, **caractérisé en ce que** le guide de lumière (11 ; 11' ; 111) est fabriqué pour être utilisé sous forme de guide de lumière pour un capteur (124), en particulier un capteur de pluie ou un capteur de lumière.

9. Dispositif de moulage par injection de plastique pour la fabrication d'un guide de lumière (11 ; 11' ; 111) en matière plastique transparente (15 ; 115-117),
- avec un ensemble d'outils de coulée (12) qui présente un premier et au moins un deuxième élément de moule (27, 27', 28) (28), qui délimitent une première cavité du moule (13) pour former une pièce moulée par injection (37 ; 37'),
- et avec un dispositif d'injection (17) pour injecter la matière plastique (15 ; 115-117) dans la première cavité du moule (13) vide avant l'injection,
- dans lequel l'ensemble d'outils de coulée (12) présente des moyens de positionnement (26) pour former au moins une deuxième cavité du moule plus grande que la première cavité du moule (14), **caractérisé en ce que** les moyens de positionnement (26) sont conçus pour mettre à disposition la deuxième cavité du moule (14) plus grande pour l'injection d'une deuxième couche (43) de matière plastique (15 ; 115-117) sur au moins une zone de surface (39) de la pièce moulée par injection (37 ; 37') restant dans le premier élément de moule (27, 27') lors de l'agrandissement de la première cavité du moule (13) à l'aide d'une opération de rotation et/ou de déplacement rapide adaptée, lors de laquelle les moyens de positionnement (26) positionnent l'un par rapport à l'autre le premier élément de moule (27, 27') et un troisième élément de moule (29) à la place du deuxième élément de moule (28) ou un contour du premier et/ou du deuxième élément de moule (27, 27', 28) est modifié pour agrandir la première cavité du moule (13) par rapport à l'au moins une deuxième cavité du moule (14), si bien que l'au moins une zone de surface (39) refroidit au maximum dans la plage d'une température limite (Tgr) dans une plage de 80 à 150 degrés Celsius, dans laquelle l'au moins une zone de surface (39) est apte à la liaison pour la combinaison à une autre matière plastique transparente (16), et que le dispositif d'injection (17) est conçu pour mouler par injection au moins une deuxième couche (43 ; 119, 120) en matière plastique transparente (16) sur l'au moins une zone de surface (39) apte à la liaison, dans lequel les matières plastiques transparentes (15, 16) se combinent de manière essentiellement homogène à l'au moins une zone de surface (39), si bien que l'au moins une zone de surface est dissoute dans un volume interne (47 ; 47' ; 147) transparent, au moins essentiellement non réfringent, de la pièce moulée par injection (37 ; 37').

10. Dispositif de moulage par injection de plastique selon la revendication 9, **caractérisé en ce que** les moyens de positionnement (26) sont conçus pour tourner ou déplacer le premier et le troisième élément de moule (27, 27', 29) l'un par rapport à l'autre qui forment l'au moins une deuxième cavité du moule (14).

11. Dispositif de moulage par injection de plastique selon la revendication 9 ou 10, **caractérisé en ce que** le premier et/ou le deuxième élément de moule (27, 27', 28) présentent une section noyau mobile et les moyens de positionnement (26) sont conçus pour positionner la section noyau mobile dans le sens d'un agrandissement de la première cavité du moule par rapport à l'au moins une deuxième cavité du moule (14).

12. Dispositif de moulage par injection de plastique selon la revendication 9, 10 ou 11, **caractérisé en ce qu'**il présente des moyens de mise à température (40) pour la mise à température de la pièce moulée par injection (37 ; 37').

13. Dispositif de moulage par injection de plastique selon la revendication 12, **caractérisé en ce que** les moyens de mise à température (40) sont conçus pour régler la température limite (Tgr) au niveau de l'au moins une zone de surface (39) apte à la liaison et/ou pour refroidir la pièce moulée par injection (37 ; 37') sous la température limite (Tgr) dans des zones en dehors de l'au moins une zone de surface (39) apte à la liaison.
